# EUROPEAN PATENT SPECIFICATION

(11) **EP 4 057 310 B1**
(45) Date of publication and mention of the grant of the patent: **27.08.2025**
(21) Application number: 20885528.8
(22) Date of filing: 02.11.2020
(51) Int. Cl.: H01M 10/0567, H01M 10/0568, H01M 10/36, H01M 6/06, H01G 11/64, H01M 10/052, H01M 10/0563, H01M 10/0566, H01G 11/62

(54) **ELECTROLYTE SOLUTION COMPRISING A CHAOPROTIC ADDITIVE AND SALTS**
ELEKTROLYTLÖSUNG MIT EINEM CHAOPROTISCHEN ZUSATZSTOFF UND SALZEN
SOLUTION D'ÉLECTROLYTE COMPRENANT UN ADDITIF CHAOPROTIQUE ET DES SELS

(30) Priority: 05.11.2019 JP 2019200778; 05.11.2019 JP 2019200700
(43) Date of publication of application: 14.09.2022
(73) Proprietor: Kyushu University, National University Corporation, Nishi-ku Fukuoka-shi Fukuoka 819-0395 (JP); Tosoh Corporation, Yamaguchi 746-8501 (JP)
(72) Inventor: OKADA, Shigeto, Fukuoka-shi, Fukuoka 819-0395 (JP); SAKAMOTO, Ryo, Fukuoka-shi, Fukuoka 819-0395 (JP); ITO, Masato, Fukuoka-shi, Fukuoka 819-0395 (JP); USHIJIMA, Kotaro, Fukuoka-shi, Fukuoka 819-0395 (JP); TAKAHARA, Toshiya, Ayase-shi, Kanagawa 252-1123 (JP); KOBAYASHI, Wataru, Tokyo 105-0014 (JP); OKADA, Masaki, Ayase-shi, Kanagawa 252-1123 (JP)
(74) Representative: Müller-Boré & Partner Patentanwälte PartG mbB
(86) International application number: PCT/JP2020/041126
(87) International publication number: WO 2021/090815

(56) References cited:
- JP-A- 2013 135 214
- JP-A- 2018 533 823
- JP-A- H03 285 271
- JP-A- S4 846 839
- JP-A- S53 840
- JP-A- S53 841
- US-A1- 2013 163 145
- US-A1- 2016 071 658

## Description

### Technical Field

The present disclosure relates to an aqueous electrolyte solution, a method for producing an aqueous electrolyte solution, an electrochemical device including an aqueous electrolyte solution and a method for producing an electrochemical device. The present disclosure also relates to a non-aqueous electrolyte solution, a method for producing a non-aqueous electrolyte solution, an electrochemical device including a non-aqueous electrolyte solution and a method for producing an electrochemical device.

### Background Art

Aqueous electrolyte solutions are superior to non-aqueous electrolyte solutions in terms of economy and safety and thus should be promising electrolyte solutions for next-generation electrochemical devices. However, potential windows of aqueous electrolyte solutions are very narrow compared to non-aqueous electrolyte systems, which have potential windows of about 4 V. It has therefore not been possible to construct an electrochemical device that exhibits a sufficient energy density with an aqueous electrolyte solution. To address this issue, studies have been conducted to extend potential windows of aqueous electrolyte solutions. Prior art could be found in documents US2016/071658A1 and US2013/163145A1.

Hitherto, the potential window of an aqueous electrolyte solution on the reduction side has been extended by forming a solid-electrolyte interphase (SEI) at the interface between a negative electrode current collector and an electrolyte (see, for example, Patent Literatures 1 to 3).

A concentrated aqueous electrolyte solution containing, as an electrolyte, NaClO₄ dissolved to a saturation concentration is used to extend the potential window by an increase in the number of water molecules coordinated with cations, along with the extension of the potential window by the formation of SEI (see, for example, Non-Patent Literature 1).

Non-aqueous electrolyte solutions are widely used in practical applications as electrolyte solutions for electrochemical devices, such as capacitors and lithium secondary batteries, because they provide high energy as compared to aqueous electrolyte solutions.

With the miniaturization and weight reduction of portable electronic devices, there is a growing demand for higher energy in electrochemical devices. To address this demand, studies are underway to achieve even higher energy in electrochemical devices by improving the characteristics of non-aqueous electrolyte solutions.

For example, studies have been conducted to achieve higher energy by using a fluorine atom-containing carbonate compound, such as (2-fluoro-1-methylethyl)methyl carbonate, as a solvent to extend the potential window of a non-aqueous electrolyte solution (see, for example, Patent Literature 4). Studies have been conducted to achieve higher energy by using an additive, such as benzotrifluoride or a diisocyanate compound, to improve the storage characteristics and the cycle characteristics of a non-aqueous electrolyte solution containing a solvent, such as ethylene carbonate, which are widely used (see, for example, Patent Literature 5). Studies have been conducted to achieve higher energy from a comprehensive viewpoint by using triphenyl phosphate and its derivatives as additives to improve the balance of, for example, the capacity and resistance of a non-aqueous electrolyte solution containing a solvent, such as ethylene carbonate (see, for example, Patent Literature 6).

Studies have been conducted to achieve a higher energy density by adding a specific silicon compound to an electrolyte solution to improve solid-electrolyte interphase (SEI) and the cycle characteristics and so forth (see, for example, Patent Literature 7).

### Citation List

### Patent Literature

PTL 1: Japanese Unexamined Patent Application Publication (Translation of PCT Application) No. 2018-530141
PTL 2: Japanese Unexamined Patent Application Publication No. 2019-021514
PTL 3: Japanese Unexamined Patent Application Publication No. 2019-029077
PTL 4: International Publication No. 2005/123656
PTL 5: International Publication No. 2011/142276
PTL 6: Japanese Unexamined Patent Application Publication No. 2017-098101
PTL 7: Japanese Unexamined Patent Application Publication No. 2004-087459

### Non Patent Literature

NPL 1: Journal of The Electrochemical Society of Japan, 87(2019)220-226

### Summary of Invention

### Technical Problem

Although the aqueous electrolyte solutions described in the above literatures and so forth have extended potential windows, the potential windows of the aqueous electrolyte solutions are not sufficient potential regions from the viewpoint of practical use, and there is still room for further improvement. In particular, when a concentrated aqueous electrolyte solution as described in Non-Patent Literature 1 is used, the solubility of the electrolyte salt in a solvent is limited. Since the concentration of the electrolyte has already been increased to the saturation concentration, it is impossible to extend the potential window by further increasing the concentration.

Accordingly, it is one of the objects of the present disclosure to provide an aqueous electrolyte solution according to claim 1 having an extended potential window, in particular, to provide an aqueous electrolyte solution whose potential window is wider than those exhibited by conventional concentrated aqueous electrolyte solutions. It is one of other objects to provide an aqueous electrolyte solution that can improve the cycle characteristics of a sodium secondary battery and a sodium secondary battery including this aqueous electrolyte solution.

Non-aqueous electrolyte solutions capable of achieving high energy by improving various characteristics, such as potential window extension, storage characteristics and cycle characteristics, have been studied and provided.

However, in Patent Literature 4, the solvent itself is used as an electrolyte solution, which is a special compound, thus making it difficult to use as a substitute for general-purpose hydrocarbon-based carbonates. The compounds described in Patent Literatures 5 and 6 are not general-purpose compounds, and it is difficult to use them for industrial non-aqueous electrolyte solutions from the viewpoints of availability difficulties and raw-material costs.

Considering the wide variety of applications of electrolyte solutions, there is still a need for non-aqueous electrolyte solutions with superior characteristics.

It is another object of the present disclosure to provide a non-aqueous electrolyte solution capable of achieving a higher energy density, the non-aqueous electrolyte solution containing easily available and inexpensive materials and having further improved characteristics.

### Solution to Problem

The inventors have conducted studies on achieving higher energy by extending the potential window of an aqueous electrolyte solution and improving the characteristics of a non-aqueous electrolyte solution, using an approach different from the extension of the potential window by SEI formation, which is an approach that has attracted attention and widely studied in the past.

As additives for non-aqueous electrolyte solutions and aqueous electrolyte solutions (hereinafter, collectively referred to simply as "electrolyte solutions") in electrochemical devices, such as secondary batteries, additives that solve problems unique to the electrochemical field, i.e., for example, that are effective in preventing overcharging, in forming a film on a negative electrode or in protecting a positive electrode, have been used in the past. However, the inventors have focused on a substance completely different from additives usually known in the electrochemical field.

The inventors have focused on chaotropic substances, which are known to denature biopolymers, such as DNA and proteins, and have found that when a chaotropic substance is added as an additive to an electrolyte solution, the chaotropic substance does not cause any adverse effect in the redox system of an electrochemical device, and that the chaotropic additive functions effectively as an additive that can improve the characteristics of a non-aqueous electrolyte solution and achieve higher energy, and functions effectively as an additive that can extend the potential window of the aqueous electrolyte solution.

What the inventors have newly found is as follows: the concentration of an electrolyte salt in an aqueous electrolyte solution can be further increased by allowing a chaotropic additive to be present with the electrolyte salt, and the potential window of the aqueous electrolyte solution can be further extended, in particular, for a concentrated aqueous electrolyte solution, the concentration of an electrolyte salt can be increased beyond the saturation concentration of the electrolyte salt indicated by the concentrated aqueous electrolyte solution, and the potential window can be further extended, compared with the potential window indicated by the concentrated aqueous electrolyte solution.

These findings have led to the completion of the invention related to the present disclosure, which is a novel aqueous electrolyte solution with a chaotropic additive dissimilar to additives used in the electrochemical field.

Furthermore, what the inventors have newly found is as follows: the concentration of an electrolyte salt in a non-aqueous electrolyte solution can be further increased by allowing a chaotropic additive to present with the electrolyte salt to further improve (enhance) the characteristics of the non-aqueous electrolyte solution, in particular, for a concentrated non-aqueous electrolyte solution in which the electrolyte is highly concentrated up to the saturation concentration, the concentration of the electrolyte salt in the concentrated non-aqueous electrolyte solution can be further increased beyond the saturation concentration of the electrolyte salt exhibited by the concentrated non-aqueous electrolyte solution to further improve (enhance) the characteristics of the concentrated non-aqueous electrolyte solution.

These findings have led to the completion of the invention related to the present disclosure, which is a novel non-aqueous electrolyte solution with a chaotropic additive dissimilar to additives used in the electrochemical field.

That is, the present invention is as described in the claims, and the present disclosure is as follows.

[1] An electrolyte solution according to claim 1, comprising a salt of at least one selected from the group consisting of sodium, magnesium, potassium and lithium, and a chaotropic additive, in which the chaotropic additive is at least one selected from the group consisting of urea, thiourea, acetamide, trifluoroacetamide, 1,1-dimethylurea, guanidium and guanidium salts.
[9] A method for producing the electrolyte solution according to claim 9, the method comprising a step of mixing the salt of at least one selected from the group consisting of sodium, magnesium, potassium and lithium, the solvent and the chaotropic additive.

### Advantageous Effects of Invention

According to the present disclosure, it is possible to provide an aqueous electrolyte solution having an extended potential window, in particular, an aqueous electrolyte solution whose potential window is wider than those exhibited by conventional concentrated aqueous electrolyte solutions, and to provide an aqueous electrolyte solution that can improve the cycle characteristics. Moreover, according to the present disclosure, it is possible to provide a non-aqueous electrolyte solution capable of achieving a higher energy density, the non-aqueous electrolyte solution containing easily available and inexpensive materials and having further improved characteristics.

### Brief Description of Drawings

[Fig. 1] Fig. 1 is a graph illustrating the charge-discharge cycle characteristics of sodium secondary batteries in Example 1-3 and Comparative example 1-5.
[Fig. 2] Fig. 2 is a graph illustrating the linear sweep voltammograms of non-aqueous magnesium electrolyte solutions of Example 2-1 and Comparative example 2-1. Description of Embodiments

An electrolyte solution, a method for producing an electrolyte solution, an electrochemical device including an electrolyte solution and a method for producing an electrochemical device will be described in detail below. However, the description of components described below is an example (representative example) as one embodiment of the present disclosure, and is not limited to the contents thereof.

In this specification, for example, the expression of a numerical range of "1 to 100" includes both the lower limit "1" and the upper limit "100".

### (Electrolyte Solution)

An electrolyte solution of the present embodiment is characterized by containing a salt of at least one selected from the group consisting of sodium, magnesium, potassium and lithium, preferably a salt of at least one selected from the group consisting of sodium, magnesium and lithium (hereinafter, also referred to as an "electrolyte salt"), the solvent and a chaotropic additive.

An aqueous electrolyte solution of the present embodiment contains the chaotropic additive and thus can have a wider potential window than chaotropic additive-free aqueous electrolyte solutions. In addition, a non-aqueous electrolyte solution of the present embodiment contains the chaotropic additive and thus can have improved characteristics as compared to chaotropic additive-free non-aqueous electrolyte solutions, and can achieve a higher energy density.

In this specification, the term "aqueous electrolyte solution" refers to an aqueous solution having electrical conductivity, preferably an aqueous solution used as an electrolyte solution for an electrochemical device, more preferably an aqueous solution used as an electrolyte solution for a charge-discharge device.

In the aqueous electrolyte solution of the present embodiment, the main solvent is water, and the solvent is preferably water only. In the aqueous electrolyte solution of the present embodiment, an example thereof is water having an electrical resistance of 1 mS or less at room temperature. Specific examples of water include distilled water, ion-exchanged water, pure water and ultrapure water.

In this specification, the term "non-aqueous electrolyte solution" refers to a non-aqueous solution having electrical conductivity, preferably a non-aqueous solution used as an electrolyte solution for an electrochemical device, more preferably a non-aqueous solution used as an electrolyte solution for a charge-discharge device.

In the non-aqueous electrolyte solution of the present embodiment, the main solvent is a non-aqueous solvent, and the solvent is preferably a non-aqueous solvent only.

### <Non-Aqueous Solvent>

Examples of the non-aqueous solvent include organic solvents, such as esters, ethers, carbonates, nitriles, sulfolanes, furans and dioxolanes. Specific examples thereof include carbonates, such as ethylene carbonate, propylene carbonate, vinylene carbonate, butylene carbonate, chloroethylene carbonate, dimethyl carbonate, ethyl methyl carbonate, diethyl carbonate, ethyl n-butyl carbonate, methyl tert-butyl carbonate, diisopropyl carbonate and tert-butyl isopropyl carbonate; esters, such as γ-butyrolactone, γ-valerolactone, methyl formate, methyl acetate, ethyl acetate and methyl butyrate; ethers, such as dimethoxyethane, ethoxymethoxyethane and diethoxyethane; nitriles, such as acetonitrile and benzonitrile; furans, such as tetrahydrofuran and methyltetrahydrofuran; sulfolanes, such as sulfolane and tetramethylsulfolane; and dioxolanes, such as 1,3-dioxolane and methyldioxolane.

These non-aqueous solvents may be used alone or in combination as a mixture of two or more.

### <Electrolyte Salt>

The electrolyte salt used in the electrolyte solution of the present embodiment is not particularly limited as long as a salt that functions as an electrolyte is contained. Specific examples of the electrolyte salt include sulfates, nitrates, acetates, chlorates, perchlorates, hypochlorites, hydroxide salts, chloride salts, fluoride salts and imide salts containing cations, such as cations of sodium, magnesium, potassium and lithium, preferably cations, such as cations of sodium, magnesium and lithium (hereinafter, also referred to as "charge-discharge cations"). Among these, chlorates, perchlorates, hypochlorites, hydroxide salts and chloride salts, containing charge-discharge cations are preferred. Chlorates, perchlorates and hypochlorites, containing charge-discharge cations are more preferred.

As described above, examples of the charge-discharge cations include sodium, magnesium, potassium and lithium, and further include sodium, magnesium and lithium. Among these, one or more selected from the group consisting of sodium, magnesium and potassium are preferred. At least one of sodium and magnesium is preferred. Sodium is more preferred. In another embodiment, at least one of sodium and potassium is preferred, and potassium is more preferred.

Specific examples of the electrolyte salt containing sodium serving as the charge-discharge cation include sodium hexafluorophosphate, sodium tetrafluoroborate, sodium trifluoromethanesulfonate, sodium sulfate, sodium nitrate, sodium acetate, sodium chlorate, sodium perchlorate, sodium hypochlorite, sodium hydroxide, sodium chloride, sodium fluoride, sodium bis(fluorosulfonyl)imide, sodium bis(trifluoromethanesulfonyl)imide and sodium bis(pentafluoroethanesulfonyl)imide. Among these, sodium chlorate, sodium perchlorate, sodium hypochlorite, sodium hydroxide and sodium chloride are preferred. Sodium chlorate, sodium perchlorate and sodium hypochlorite are more preferred. These electrolyte salts may be used alone or in combination as a mixture of two or more.

Specific examples of the electrolyte salt containing magnesium serving as the charge-discharge cation include magnesium trifluoromethanesulfonate, magnesium sulfate, magnesium nitrate, magnesium acetate, magnesium chlorate, magnesium perchlorate, magnesium hypochlorite, magnesium hydroxide, magnesium chloride, magnesium fluoride, magnesium bis(fluorosulfonyl)imide, magnesium bis(trifluoromethanesulfonyl)imide and magnesium bis(pentafluoroethanesulfonyl)imide. Among these, magnesium chlorate, magnesium perchlorate, magnesium hypochlorite, magnesium hydroxide and magnesium chloride are preferred. Magnesium chlorate, magnesium perchlorate and magnesium hypochlorite are more preferred. These electrolyte salts may be used alone or in combination as a mixture of two or more.

Specific examples of the electrolyte salt containing potassium serving as a charge-discharge cation include potassium hexafluorophosphate, potassium tetrafluoroborate, potassium trifluoromethanesulfonate, potassium sulfate, potassium nitrate, potassium acetate, potassium chlorate, potassium perchlorate, potassium hypochlorite, potassium hydroxide, potassium chloride, potassium fluoride, potassium bis(fluorosulfonyl)imide, potassium bis(trifluoromethanesulfonyl)imide and potassium bis(pentafluoroethanesulfonyl)imide. Among these, potassium chlorate, potassium perchlorate, potassium hypochlorite, potassium hydroxide and potassium chloride are preferred. Potassium chlorate, potassium perchlorate and potassium hypochlorite are more preferred. These electrolyte salts may be used alone or in combination as a mixture of two or more.

Specific examples of the electrolyte salt containing lithium serving as a charge-discharge cation include lithium hexafluorophosphate, lithium tetrafluoroborate, lithium trifluoromethanesulfonate, lithium sulfate, lithium nitrate, lithium acetate, lithium chlorate, lithium perchlorate, lithium hypochlorite, lithium hydroxide, lithium chloride, lithium fluoride, lithium bis(fluorosulfonyl)imide, lithium bis(trifluoromethanesulfonyl)imide and lithium bis(pentafluoroethanesulfonyl)imide. Among these, lithium chlorate, lithium perchlorate, lithium hypochlorite, lithium hydroxide and lithium chloride are preferred. Lithium chlorate, lithium perchlorate and lithium hypochlorite are more preferred. These electrolyte salts may be used alone or in combination as a mixture of two or more.

Any concentration of the electrolyte salt in the electrolyte solution of the present embodiment may be used. To provide an electrolyte solution having a wider potential window, the concentration of the electrolyte salt is preferably a saturation concentration, more preferably a concentration more than the saturation concentration. In this specification, the expression "concentration more than the saturation concentration" refers to a concentration more than the maximum dissolution concentration of the electrolyte salt when the electrolyte salt is dissolved alone (that is, in the absence of a chaotropic additive) in a solvent (water for an aqueous electrolyte solution, or a non-aqueous solvent for a non-aqueous electrolyte solution, the same applies hereinafter).

The concentration of the electrolyte salt in the electrolyte solution of the present embodiment is preferably 1.2 or more times the saturation concentration, more preferably 1.4 or more times the saturation concentration, although the solubility varies in accordance with the type of the electrolyte salt. The concentration of the electrolyte salt in the electrolyte solution of the present embodiment is preferably, for example, 4 or less times the saturation concentration, more preferably 3.5 or less times the saturation concentration, although the solubility varies in accordance with the type of the electrolyte salt.

When the electrolyte salt is a perchlorate, the mass concentration of the electrolyte salt in the electrolyte solution is preferably 1 mol/kg or more, more preferably 5 mol/kg or more, even more preferably 10 mol/kg or more. When the electrolyte salt is a perchlorate, the mass concentration of the electrolyte salt in the electrolyte solution is preferably 30 mol/kg or less, more preferably 28 mol/kg or less, even more preferably 26 mol/kg or less.

### <<Auxiliary Electrolyte Salt>>

In the present embodiment, the non-aqueous electrolyte solution may contain a quaternary onium salt as an auxiliary electrolyte salt. This makes it easier to achieve a higher energy density when the non-aqueous electrolyte solution of the present embodiment is used as a non-aqueous electrolyte solution for an electric double-layer capacitor.

Specific examples of the quaternary onium salt include (C₂H₅)₄NBF₄, (C₂H₅)₄NPF₆, (C₂H₅)₄NClO₄, (C₂H₅)₄PBF₄, (C₂H₅)₄PPF₆, (C₂H₅)₄PClO₄, (C₃H₇)₄PBF₄, (C₃H₇)₄PPF₆, (C₃H₇)₄PClO₄, (C₃H₇)₄NBF₄, (C₃H₇)₄NPF₆, (C₃H₇)₄NClO₄, (CH₃)₄NBF₄, (CH₃)₄NPF₆, (CH₃)₄NClO₄, (CH₃)₄PBF₄, (CH₃)₄PPF₆ and (CH₃)₄PClO₄. Among these, (C₂H₅)₄NBF₄, (C₂H₅)₄NPF₆, (C₂H₅)₄NClO₄, (CH₃)₄NBF₄, (CH₃)₄NPF₆ and (CH₃)₄NClO₄ are preferred. These auxiliary electrolyte salts may be used alone or in combination as a mixture of two or more.

### <Chaotropic Additive>

Chaotropic additives are substances that denature biopolymers, such as DNA and proteins, and are compounds that disrupt their steric structure and biological functions by intervening in the hydrogen bonding network. The chaotropic additive used in the electrolyte solution of the present embodiment is a compound containing at least one of cations and anions on the right side of the Hofmeister series, and furthermore, a compound containing at least one of cations and anions exhibiting chaotropic properties. In this specification, the term "chaotropic properties" refers to properties possessed by chaotropic additives, which can intervene in the hydrogen bonding network of, for example, biopolymers and water to change their structures.

Examples of the chaotropic additive include amines, alcohols, and acids that exhibit chaotropic properties. Among these, amines and alcohols that have hydrogen-bonding functional groups and that exhibit chaotropic properties are preferred.

Specific examples of the chaotropic additive include acetamide, N-methylacetamide, oxalic acid, malonic acid, malic acid, xylitol, urea, 1,1-dimethylurea, guanidium, guanidium salts, isosorbide, tartaric acid, tricarbaryl acid, thiourea, thiocyanic acid, trifluoroacetamide, benzoic acid, itaconic acid, citric acid, imidazole, 2-imidazolidinone, 4-hydroxybenzoic acid, cinnamic acid, ethylene glycol, propyleneurea, resorcinol, phenylacetic acid, D-sorbitol, lactic acid, 1,3-dimethylurea, levulinic acid, gallic acid, caffeic acid, 1-methylurea, glycerol, succinic acid, caproic acid, coumaric acid, stearic acid, adipic acid, oleic acid, suberic acid, linoleic acid and decanoic acid. Among these, acetamide, N-methylacetamide, xylitol, urea, 1,1-dimethylurea, guanidium, guanidium salts, isosorbide, thiourea, trifluoroacetamide, imidazole, 2-imidazolidinone, ethylene glycol, propyleneurea, resorcinol, D-sorbitol, 1,3-dimethylurea and glycerol are preferred. Urea, thiourea, acetamide, trifluoroacetamide, 1,1-dimethylurea, guanidium and guanidium salts are more preferred in view of handleability. From the viewpoint of availability, urea and thiourea are particularly preferred, and urea is particularly preferred. These chaotropic additives may be used alone or in combination as a mixture of two or more.

The chaotropic additive is preferably one or more selected from the group consisting of ethylene glycol, diethylene glycol, triethylene glycol, poly(ethylene glycol), glycerol, erythritol and threitol, more preferably one or more selected from the group consisting of ethylene glycol and poly(ethylene glycol), and even more preferably ethylene glycol, because the cycle characteristics of an electrochemical device, such as a sodium battery, containing the chaotropic additive in the electrolyte solution tend to be improved.

### <Additive Other Than Chaotropic Additive>

The electrolyte solution of the present embodiment can contain additives other than chaotropic additives as needed to adjust physical properties and characteristics, such as storage stability and battery characteristics. The amount of an optional additive other than the chaotropic additive contained in the electrolyte solution is, but not particularly limited to, for example, 0.01% by mass or more and 10% by mass or less based on the mass of the electrolyte solution.

### (Characteristics of Aqueous Electrolyte Solution)

### <Potential Window>

The potential window of the aqueous electrolyte solution of the present embodiment is not particularly limited as long as it is wider than the potential window (1.23 V) of water as a solvent, and is, for example, 2.0 V or more, preferably 2.5 V or more. The potential window can vary in accordance with the charge-discharge cations in the electrolyte salt, and is not particularly limited. For example, when the charge-discharge cations are sodium, the potential window is 2.4 V or more and 3.5 V or less. When the charge-discharge cations are magnesium, the potential window is 2.1 V or more and 3.0 V or less. When the charge-discharge cations are potassium, the potential window is 1.9 V or more and 2.5 V or less. When the charge-discharge cations are lithium, the potential window is 1.3 V or more and 3.5 V or less.

### <Oxygen Evolution Potential and Hydrogen Evolution Potential>

The oxygen evolution potential and the hydrogen evolution potential of the aqueous electrolyte solution of the present embodiment vary in accordance with the concentration of the electrolyte salt. For example, at a temperature of 25°C, the oxygen evolution potential is preferably 1.2 V or more, more preferably 1.4 V or more, with respect to a silver/silver chloride electrode. For example, at a temperature of 25°C, the hydrogen evolution potential is preferably -1.0 V or less, more preferably -1.2 V or less, with respect to the silver/silver chloride electrode.

In the aqueous electrolyte solution of the present embodiment, it is considered that oxygen evolution and hydrogen evolution are suppressed by a chaotropic effect provided by the presence of both of the chaotropic additive and the electrolyte salt in the aqueous electrolyte solution. At the same time, it is considered that the potential window can also be extended by the formation of an SEI, which is a passive film, on a negative electrode current collector due to the precipitation of cations associated with charging and discharging.

### (Characteristics of Non-Aqueous Electrolyte Solution)

The non-aqueous electrolyte solution of the present embodiment can have improved characteristics, such as a wider potential window, and the improved characteristics can lead to achieving a higher energy density, as compared with, for example, a chaotropic additive-free non-aqueous electrolyte solution having the same electrolyte salt concentration.

In the non-aqueous electrolyte solution of the present embodiment, it is considered that the decomposition of the non-aqueous solvent is suppressed by a chaotropic effect provided by the presence of both of the chaotropic additive and the electrolyte salt in the non-aqueous electrolyte solution. Moreover, it is considered that an SEI, which is a passive film, can be formed on a negative electrode current collector due to the precipitation of cations associated with charging and discharging.

### (Method for Producing Electrolyte Solution)

A method for producing the aqueous electrolyte solution according to claim 9 can be freely selected. It is sufficient to mix an electrolyte salt, a chaotropic additive, and a solvent. Any mixing method can be employed. Examples of the mixing method include a method in which an electrolyte salt, a chaotropic additive and a solvent are mixed together to achieve a desired electrolyte concentration; a method in which an electrolyte salt and a chaotropic additive are dissolved in a solvent and then the resulting solution is diluted to achieve the desired electrolyte concentration; and a method in which a chaotropic additive and a solvent are mixed together and then an electrolyte salt is mixed therewith.

A specific example of a method for producing an electrolyte solution of the present embodiment is as follows: For example, an electrolyte salt and a chaotropic additive are added to a solvent (pure water for an aqueous electrolyte solution or a non-aqueous solvent for a non-aqueous electrolyte solution). The mixture is stirred at room temperature (for example, 20°C to 30°C) until the electrolyte salt and the chaotropic additive are dissolved. In particular, when a concentrated solution is produced, the precipitated salt is preferably removed by, for example, filtration.

### (Electrochemical Device)

The electrochemical device in the present embodiment only needs to include the electrolyte solution of the present embodiment. In this specification, the term "electrochemical device" refers to a device that converts chemical energy into electrical energy. Examples thereof include charge-discharge devices, such as capacitors, air batteries, primary batteries and secondary batteries, preferably capacitors and secondary batteries, more preferably secondary batteries. In the case where the electrolyte solution of the present embodiment is an aqueous electrolyte solution, when it is used for these applications, the aqueous electrolyte solution can also be regarded as, for example, an aqueous electrolyte solution for electrochemical devices, an aqueous electrolyte solution for charge-discharge devices, an aqueous electrolyte solution for capacitors, an aqueous electrolyte solution for air batteries, an aqueous electrolyte solution for primary batteries, and an aqueous electrolyte solution for secondary batteries. In the case where the electrolyte solution of the present embodiment is a non-aqueous electrolyte solution, the non-aqueous electrolyte solution can also be regarded as, for example, a non-aqueous electrolyte solution for electrochemical devices, a non-aqueous electrolyte solution for charge-discharge devices, a non-aqueous electrolyte solution for capacitors, a non-aqueous electrolyte solution for air batteries, a non-aqueous electrolyte solution for primary batteries, and a non-aqueous electrolyte solution for secondary batteries.

An electrochemical device including the electrolyte solution of the present embodiment will be described below by taking a secondary battery as an example.

### <Secondary Battery>

The secondary battery of the present embodiment only needs to include the electrolyte solution of the present embodiment as described above.

The secondary battery of the present embodiment includes an electrolyte solution containing a salt of at least one selected from the group consisting of sodium, magnesium, potassium and lithium, preferably a salt of at least one selected from the group consisting of sodium, magnesium and lithium, and a chaotropic additive, a positive electrode and a negative electrode.

The secondary battery of the present embodiment is what is called an aqueous secondary battery when the electrolyte solution is an aqueous electrolyte solution, or is what is called a non-aqueous secondary battery when the electrolyte solution is a non-aqueous electrolyte solution. The secondary battery of the present embodiment can also be regarded as a sodium secondary battery or sodium ion battery when the electrolyte salt is a salt of sodium, a magnesium secondary battery or magnesium ion battery when the electrolyte salt is a salt of magnesium, a potassium secondary battery or potassium ion battery when the electrolyte salt is a salt of potassium, or a lithium secondary battery or lithium ion battery when the electrolyte salt is a salt of lithium.

### <Positive Electrode>

The positive electrode of the secondary battery of the present embodiment includes a positive electrode active material layer containing at least a positive electrode active material.

The positive electrode active material can be any substance capable of intercalating and deintercalating charge-discharge cations or capable of forming a compound reversibly with charge-discharge cations, and any known positive electrode active material used in secondary batteries can be used.

The positive electrode active material is preferably capable of reversibly intercalating and deintercalating as many cations as possible in a potential range in which oxygen is not generated by electrolysis of the solvent.

Examples of the positive electrode active material include oxides, fluorides, halides, polyanionic compounds, Prussian blue, Prussian blue analogues and organic compounds. Among these, fluorides, Prussian blue, Prussian blue analogues and polyanionic compounds are preferred. In this specification, Prussian blue analogues are each a compound in which one or more Fe atoms in Prussian blue (Fe₄[Fe(CN)₆]₃) are replaced with a transition metal element other than Fe.

When the charge-discharge cations are sodium, specific examples of the positive electrode active material include Na_{0.44}MnO₂, MnO₂, Na_{2.7}Ru₄O₉, Na₂FeP₂O₇, NaCo_{1/3}Ni_{1/3}Mn_{1/3}PO₄, Na_{X}FePO₄, Na_{X}MnPO₄, Na₃FePO₄CO₃, Na₃MnPO₄CO₃, Na₂FePO₄F, Na₂MnPO₄F, Na₃V₂(PO₄)₃, NaVPO₄F, Na₂Mn[Mn(CN)₆] and Na₂Mn[Fe(CN)₆]. Among these, Na₃FePO₄CO₃, Na₂FePO₄F, Na₃V₂(PO₄)₃, NaVPO₄F, Na₂Mn[Mn(CN)₆] and Na₂Mn[Fe(CN)₆] are preferred. These positive electrode active materials may be used alone or in combination as a mixture of two or more.

When the charge-discharge cations are magnesium, specific examples of the positive electrode active material include MgFeMn₂O₄, MgMn₂O₄, MgFeSiO₄, MgMnSiO₄, MgFePO₄F, MgMnPO₄F, MgₓLiV₂(PO₄)₃ and nickel hexacyanoferrate (NiHCF). Among these, MgFeSiO₄, MgFePO₄F and MgₓLiV₂(PO₄)₃ are preferred. These positive electrode active materials may be used alone or in combination as a mixture of two or more.

When the charge-discharge cations are potassium, specific examples of the positive electrode active material include K_{0.44}MnO₂, MnO₂, K₂FeP₂O₇, KCo_{1/3}Ni_{1/3}Mn_{1/3}PO₄, K_{X}FePO₄, K_{X}MnPO₄, K₂FePO₄F, K₂MnPO₄F, K₂CoPO₄F, K₃V₂(PO₄)₃, KVPO₄F, K₂Mn[Mn(CN)₆] and K₂Mn[Fe(CN)₆]. Among these, K₂FePO₄F, K₃V₂(PO₄)₃, KVPO₄F, K₂Mn[Mn(CN)₆] and K₂Mn[Fe(CN)₆] are preferred. These positive electrode active materials may be used alone or in combination as a mixture of two or more.

When the charge-discharge cations are lithium, specific examples of the positive electrode active material include LiMn₂O₄, LiMnO₂, MnO₂, LiCoO₂, LiNi_{1/3}Co_{1/3}Mn_{1/3}O₂, Na_{1.16}V₃O₈, LiFePO₄, FePO₄, LiMnPO₄, Li(Fe,Mn)PO₄, LiCoPO₄, LiNiPO₄, LiCo_{1/2}Ni_{1/2}PO₄, Li₂FePO₄F, Li₂MnPO₄F, Li₃FePO₄CO₃ and Li₃MnPO₄CO₃. Among these, LiMn₂O₄, LiFePO₄, Li₂FePO₄F and Li₃FePO₄CO₃ are preferred. These positive electrode active materials may be used alone or in combination as a mixture of two or more.

The physical properties, such as the particle size and specific surface area, of the positive electrode active material may be adjusted according to the purpose.

The positive electrode active material layer may contain, for example, a binder, a conductive material and an additive.

The binder may be any binder used for positive electrodes of secondary batteries. Examples thereof include fluorine-containing resins, such as poly(vinylidene fluoride) (PVDF), polytetrafluoroethylene (PTFE) and ethylene tetrafluoroethylene (ETFE) fluorine, polyethylene, polypropylene, SBR-based materials and imide-based materials.

The conductive material may be any conductive material used for positive electrodes of secondary batteries. Examples thereof include conductive fibers composed of at least one of carbon materials and metal fibers; powders of metals, such as copper, silver, nickel and aluminum; and organic conductive materials, such as polyphenylene derivative. Examples of carbon materials include graphite, soft carbon, hard carbon, carbon black, Ketjen black, acetylene black, graphite, activated carbon, carbon nanotubes, carbon fiber, aromatic ring-containing synthetic resins, and mesoporous carbon obtained by heating petroleum-based pitch.

### <<Negative Electrode>>

The negative electrode of the secondary battery of the present embodiment includes a negative electrode active material layer that contains at least a negative electrode active material.

The negative electrode active material can be any negative electrode active material used for secondary batteries. Examples thereof include substances capable of intercalating and deintercalating charge-discharge cations, substances that form compounds reversibly with charge-discharge cations, substances that are reversibly alloyed with charge-discharge cations, platinum, zinc, carbon materials, materials that form alloys with charge-discharge cations, transition metal oxides containing charge-discharge cations, polyanionic materials containing charge-discharge cations, Prussian blue, Prussian blue analogues and organic compounds. Among these, carbon materials, polyimides, transition metal-containing cyano compounds, transition metal-containing polyanionic compounds, Prussian blue and Prussian blue analogues are preferred.

When the charge-discharge cations are sodium, specific examples of the negative electrode active material are as follows: Examples of carbon materials include activated carbon. Examples of transition metal-containing cyano compounds include Na₂Mn[Mn(CN)₆] and K_{0.11}Mn[Mn(CN)₆]_{0.38}. Examples of transition metal-containing polyanionic compounds include NaTi₂(PO₄)₃, Na₂V₆O₁₆·nH₂O and C₁₄H₁₀N₂O₆. Among these, NaTi₂(PO₄)₃ is preferred. These negative electrode active materials may be used alone or in combination as a mixture of two or more.

When the charge-discharge cations are magnesium, specific examples of the negative electrode active material include Mg_{1.5}MnO₂, MgMn₂O₄, Mo₆S₈, Mg_{1.03}Mn_{0.97}SiO₄, poly(pyromellitic anhydride) (PPMDA), CuFeHCF and NiHCF. Among these, Mg_{1.03}Mn_{0.97}SiO₄, poly (pyromellitic dianhydride) (PPMDA) and nickel hexacyanoferrate (NiHCF) are preferred. These negative electrode active materials may be used alone or in combination as a mixture of two or more.

When the charge-discharge cations are potassium, specific examples of the negative electrode active material are as follows: Examples of carbon materials include activated carbon. Examples of organic compounds include K₂C₈H₄O₄ and C₁₄H₁₀N₂O₆. Examples of transition metal-containing cyano compounds include K₂Mn[Mn(CN)₆] and K_{0.11}Mn[Mn(CN)₆]_{0.38}. An example of transition metal-containing polyanionic compounds is KTi₂(PO₄)₃. Among these, KTi₂(PO₄)₃ is preferred. These negative electrode active materials may be used alone or in combination as a mixture of two or more.

When the charge-discharge cations are lithium, specific examples of the negative electrode active material include graphite, hard carbon, MCMB, Si, SiO, Li₄Ti₅O₁₂, VO₂(B), Li₂Mn₂O₄, γ-LiV₃O₈, H₂V₂O₈, Na₁₊ₓV₃O₈, VO₂, V₂O₅, TiO₂, TiP₂O₇, LiTi₂(PO₄)₃, polypyrroles and polyimides. Among these, graphite, Si, TiO₂ and Li₄Ti₅O₁₂ are preferred. These negative electrode active materials may be used alone or in combination as a mixture of two or more.

The physical properties, such as the particle size and specific surface area, of the negative electrode active material may be adjusted according to the purpose.

The negative electrode active material layer may contain, for example, a binder, a conductive material and an additive. As the binder, the conductive material and the additive, those similar to those contained in the positive electrode active material layer can be used.

As components other than those described above in the secondary battery of the present embodiment, for example, a separator, a positive electrode current collector, a negative electrode current collector, a casing and a lead, those used for known secondary batteries can be used. For example, the separator may be any separator that transmits cations and electrically separates the positive electrode and the negative electrode from each other, and may be any separator used in batteries including electrolyte solutions. Specific examples of the separator include porous membranes, such as porous polyethylene membranes, porous polypropylene membranes, porous polytetrafluoroethylene membranes, porous aramid resin membranes and porous ceramic membranes; and nonwoven fabric membranes, such as nonwoven polyethylene fabrics, nonwoven polypropylene fabrics, nonwoven glass fiber fabrics and nonwoven cellulose fabrics.

A method of producing the secondary battery of the present embodiment is freely selected, and any known method can be employed.

### EXAMPLES

While the present embodiment will be described below by means of examples, the present embodiment is not limited to the following examples.

### <Evaluation of Aqueous Electrolyte Solution>

The potential windows of aqueous electrolyte solutions in Examples 1-1 and 1-2 and Comparative examples 1-1 to 1-4 were measured by linear sweep voltammetry. The measurement conditions are described below.
Working electrode: Ti mesh (trade name: Expanded Metal, available from Thank Metal Co., Ltd.)
Counter electrode: zinc plate (trade name: ZN483384, available from The Nilaco Corp.)
Reference electrode: silver/silver chloride electrode (trade name: RE-1CP, available from BAS Inc.)
Potential scan rate: 0.5 mV/sec
Measurement temperature: 25°C
Measurement device: potentio-galvanostat (device name: Versastat 3, available from AMETEK Inc.)

### (Example 1-1)

Urea was dissolved in water to prepare an aqueous urea solution having a urea concentration of 18 mol/kg. At room temperature, NaClO₄ was dissolved in the aqueous urea solution until the solution was saturated therewith, thereby preparing an aqueous electrolyte solution having a urea concentration of 18 mol/kg and a NaClO₄ concentration of 25 mol/kg.

The resulting aqueous electrolyte solution had a hydrogen evolution potential of -1.45 V, an oxygen evolution potential of 1.54 V and a potential window of 2.99 V.

### (Comparative Example 1-1)

At room temperature, NaClO₄ was dissolved in water until the solution was saturated therewith, preparing an aqueous electrolyte solution having a NaClO₄ concentration of 17 mol/kg.

The resulting aqueous electrolyte solution had a hydrogen evolution potential of -0.62 V, an oxygen evolution potential of 1.86 V and a potential window of 2.48 V.

Comparison of Example 1-1 and Comparative example 1-1 revealed that the presence of urea allowed the electrolyte salt to dissolve beyond the saturation concentration, up to 1.17 times the saturation concentration, and moreover, allowed both of the oxygen evolution potential and the hydrogen evolution potential to shift to extend the potential window.

### (Comparative Example 1-1a)

At room temperature, NaClO₄ was dissolved in water until the solution was saturated, thereby preparing an aqueous electrolyte solution having a NaClO₄ concentration of 17 mol/kg. When ammonium sulfate was added to the electrolyte solution, a salt was precipitated. The supernatant solution had a hydrogen evolution potential of -0.30 V, an oxygen evolution potential of 1.30 V and a potential window of 1.60 V.

### (Example 1-2)

Urea was dissolved in water to prepare an aqueous urea solution having a urea concentration of 25 mol/kg. At room temperature, Mg(ClO₄)₂ was dissolved in the aqueous urea solution until the solution was saturated therewith, thereby preparing an aqueous electrolyte solution having a urea concentration of 25 mol/kg and a Mg(ClO₄)₂ concentration of 14 mol/kg.

The resulting aqueous electrolyte solution had a hydrogen evolution potential of -1.00 V, an oxygen evolution potential of 1.50 V and a potential window of 2.50 V.

### (Comparative Example 1-2)

At room temperature, Mg(ClO₄)₂ was dissolved in water until the solution was saturated therewith, thereby preparing an aqueous electrolyte solution having a Mg(ClO₄)₂ concentration of 4 mol/kg.

The resulting aqueous electrolyte solution had a hydrogen evolution potential of -0.60 V, an oxygen evolution potential of 1.50 V and a potential window of 2.10 V.

Comparison with Example 1-2 revealed that the presence of urea allowed the electrolyte salt to dissolve beyond the saturation concentration, up to 3.5 times the saturation concentration, and moreover, allowed the hydrogen evolution potential to shift to extend the potential window.

### (Comparative Example 1-3)

At room temperature, magnesium bis(trifluoromethanesulfonyl)imide (Mg(TFSI)₂) was dissolved in water to prepare an aqueous electrolyte solution having a Mg(TFSI)₂ concentration of 4 mol/kg.

The resulting aqueous electrolyte solution had a hydrogen evolution potential of -0.9 V, an oxygen evolution potential of 1.1 V and a potential window of 2.0 V.

Comparison with Example 1-2 revealed that Mg(TFSI)₂ did not increase the oxygen evolution potential.

### (Comparative Example 1-4)

At room temperature, magnesium sulfate (MgSO₄) was dissolved in water to prepare an aqueous electrolyte solution having a MgSO₄ concentration of 1 mol/kg.

The resulting aqueous electrolyte solution had a hydrogen evolution potential of -0.4 V, an oxygen evolution potential of 0.9 V and a potential window of 1.3 V.

### <Evaluation of Electrochemical Device Including Aqueous Electrolyte Solution>

### (Example 1-3)

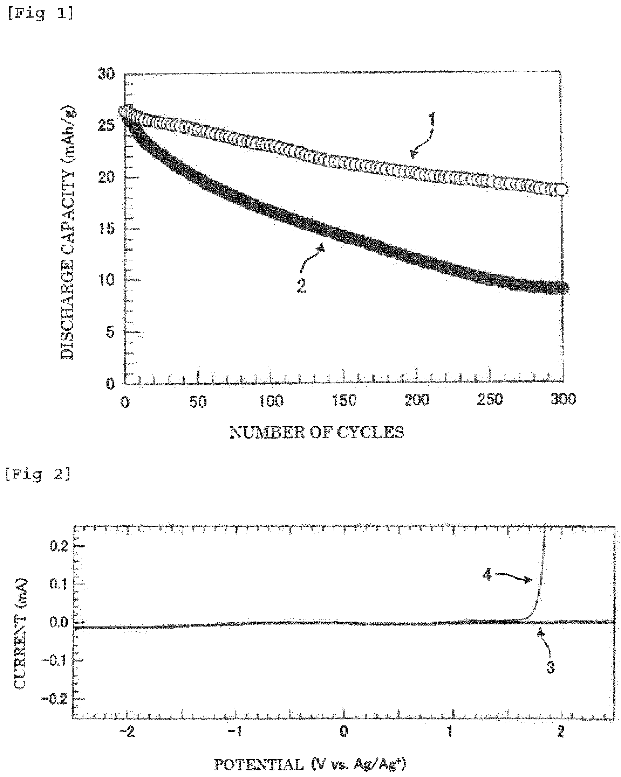

A sodium secondary battery was produced using an aqueous electrolyte solution prepared in the same manner as in Example 1-1 as an electrolyte solution, a hydrated product (hereinafter, also referred to as "NMHCF") of a Prussian blue analogue represented by the general formula Na₂Mn[Fe(CN)₆] synthesized by a coprecipitation method as a positive electrode active material and a Prussian blue analogue (hereinafter, also referred to as "KMHCC") represented by the general formula KMn[Cr(CN)₆] synthesized by a coprecipitation method as a negative electrode active material. The configuration of the produced sodium secondary battery is described below.
Positive electrode active material: NMHCF
Negative electrode active material: KMHCC
Ratio by mass: NMHCF/KMHCC = 2/3
Current collector: Ti mesh
The sodium secondary battery including the aqueous electrolyte solution was connected to a charge-discharge apparatus (apparatus name: Charge-discharge apparatus BTS2004H, available from Nagano Co., Ltd.), and a charge-discharge test was performed under the following conditions. Fig. 1 illustrates the results.
Measurement mode: charging and discharging at constant current
Current value: 5 mA/cm²
Measurement voltage: 0 V to 2 V

### (Comparative Example 1-5)

A sodium secondary battery was produced in the same manner as in Example 1-3, except that an aqueous electrolyte solution prepared by the same method as in Comparative example 1-1 was used as the electrolyte solution. A charge-discharge test was performed. Fig. 1 illustrates the results.

Fig. 1 indicated that the discharge capacity of the sodium secondary battery of Example 1-3 was higher than that of the sodium secondary battery of Comparative example 1-5, after 300 charge-discharge cycles. This demonstrated that the aqueous electrolyte solution of the present embodiment can also contribute to improving the cycle characteristics.

### (Example 1-4)

Ethylene glycol was dissolved in water to prepare an aqueous ethylene glycol solution having an ethylene glycol concentration of 25 mol/kg. At room temperature, NaClO₄ was dissolved in the aqueous ethylene glycol solution until the solution was saturated therewith, thereby preparing an aqueous electrolyte solution having an ethylene glycol concentration of 25 mol/kg and a NaClO₄ concentration of 27 mol/kg.

The resulting aqueous electrolyte solution had a hydrogen evolution potential of -0.62 V, an oxygen evolution potential of 1.86 V and a potential window of 2.48 V.

A sodium secondary battery was produced in the same manner as in Example 1-3, except that the resulting electrolyte solution was used and the ratio by mass of the positive electrode to the negative electrode was NMHCF/KMHCC = 1/2. A charge-discharge test was performed.

The aqueous electrolyte solution of this Example had the same potential window as the aqueous electrolyte solution of Comparative example 1-1. Nevertheless, the discharge capacity of the sodium battery of this Example was 1.5 times the discharge capacity of the sodium secondary battery of Comparative example 1-1, after 300 charge-discharge cycles. This indicated that ethylene glycol was effective in improving the cycle characteristics.

### (Example 1-5)

An aqueous electrolyte solution having an ethylene glycol concentration of 25 mol/kg and a NaClO₄ concentration of 29 mol/kg was prepared in the same manner as in Example 1-4, except that an aqueous ethylene glycol solution having an ethylene glycol concentration of 25 mol/kg was used.

A sodium secondary battery was produced in the same manner as in Example 1-4, except that the resulting electrolyte solution was used. A charge-discharge test was performed.

The aqueous electrolyte solution of this example had the same potential window as the aqueous electrolyte solution of Comparative example 1-1. Nevertheless, the discharge capacity of the sodium battery of this Example was 1.6 times the discharge capacity of the sodium secondary battery of Comparative example 1-1, after 100 charge-discharge cycles. This indicated that ethylene glycol was effective in improving the cycle characteristics.

### (Example 1-6)

Urea was dissolved in water to prepare an aqueous urea solution having a urea concentration of 5 mol/kg. At room temperature, potassium nitrate (KNO₃) was dissolved in the aqueous urea solution until the solution was saturated therewith, thereby preparing an aqueous electrolyte solution having a urea concentration of 5 mol/kg and a KNO₃ concentration of 4 mol/kg. The aqueous electrolyte solution had a hydrogen evolution potential of -0.40 V, an oxygen evolution potential of 1.50 V and a potential window of 1.90 V.

### (Comparative Example 1-6)

At room temperature, KNO₃ was dissolved in water until the solution was saturated therewith, thereby preparing an aqueous electrolyte solution having a KNO₃ concentration of 3 mol/kg. The resulting aqueous electrolyte solution had a hydrogen evolution potential of -0.40 V, an oxygen evolution potential of 1.40 V and a potential window of 1.80 V.

Comparison of Example 1-6 and Comparative example 1-6 revealed that, even when the potassium salt was used as an electrolyte salt, the presence of urea allowed the electrolyte salt to dissolve beyond the saturation concentration, up to 1.33 times the saturation concentration, and increased the oxygen evolution potential to extend the potential window.

### <Evaluation of Non-Aqueous Electrolyte Solution>

### (Example 2-1)

Urea was dissolved in acetonitrile to prepare a non-aqueous solution (non-aqueous urea solution) having a urea concentration of 5 mol/kg. Mg(ClO₄)₂ was dissolved in the resulting non-aqueous solution at room temperature until the solution was saturated therewith, thereby preparing a non-aqueous electrolyte solution having a urea concentration of 5 mol/kg and a Mg(ClO₄)₂ concentration of 5 mol/kg.

A model non-aqueous magnesium battery was produced using the resulting non-aqueous electrolyte solution. The non-aqueous electrolyte solution was evaluated using the model battery by linear sweep voltammetry. The evaluation conditions are described below.
Working electrode, counter electrode: Ti mesh (trade name: Expanded Metal, available from Thank Metal Co., Ltd.)
Reference electrode: silver/silver chloride electrode (trade name: RE-1CP, available from BAS Inc.)
Potential scan rate: 0.5 mV/sec
Scanning potential: -2.5 V to 2.5 V
Measurement temperature: 25°C
Measurement device: potentio-galvanostat (device name: Versastat 3, available from AMETEK Inc.)

The measurement results indicated that neither a reduction current nor an oxidation current occurred in the scanning potential range.

Fig. 2 illustrates the linear sweep voltammograms of Example 2-1 and Comparative example 2-1 below.

### (Comparative Example 2-1)

Mg(ClO₄)₂ was dissolved in acetonitrile at room temperature until the solutions was saturated therewith, thereby preparing a non-aqueous electrolyte solution having a Mg(ClO₄)₂ concentration of 2 mol/kg.

The evaluation was performed in the same manner as in Example 2-1, except that the resulting electrolyte solution was used. A rapid increase in an oxidation current was observed at 1.7 V or higher, suggesting that an oxidation reaction of the solvent occurred.

Comparison of Example 2-1 and Comparative example 2-1 revealed that the presence of urea allowed the electrolyte salt to dissolve beyond the saturation concentration, up to 2.5 times the saturation concentration. In Example 2-1, no abnormal currents were observed in the reduction current or oxidation current, indicating that no gas generation occurred in the scanning potential range. Accordingly, the comparison of Example 2-1 and Comparative example 2-1 indicated that the oxidation reaction was suppressed in the non-aqueous electrolyte solution containing urea. The incorporation of the chaotropic additive can improve the characteristics of the non-aqueous electrolyte solution, so that it is possible to provide the non-aqueous electrolyte solution that can achieve a higher energy density.

This application claims priority to Japanese Patent Application No. 2019-200700 filed November 5, 2019 and No. 2019-200778 filed November 5, 2019.

### Reference Signs List

- 1: Example 1-3
- 2: Comparative example 1-5
- 3: Example 2-1
- 4: Comparative example 2-1

## Claims

1. An electrolyte solution, comprising a solvent, a salt of at least one selected from the group consisting of sodium, magnesium, potassium and lithium, and a chaotropic additive, wherein the chaotropic additive is at least one selected from the group consisting of urea, thiourea, acetamide, trifluoroacetamide, 1,1-dimethylurea, guanidium and guanidium salts.

2. The electrolyte solution according to Claim **1,** wherein the salt is at least one selected from the group consisting of sulfates, nitrates, acetates, chlorates, perchlorates, hypochlorites, hydroxide salts, chloride salts, fluoride salts and imide salts containing at least one selected from the group consisting of sodium, magnesium, potassium and lithium.

3. The electrolyte solution according to Claim 1 or 2, wherein a mass concentration of the salt in the electrolyte solution is 1 mol/kg or more and 30 mol/kg or less.

4. The electrolyte solution according to any one of Claims 1 to 3, wherein the chaotropic additive is urea.

5. The electrolyte solution according to any one of Claims 1 to 4, wherein the electrolyte solution is an aqueous electrolyte solution.

6. The electrolyte solution according to Claim 5, wherein the main solvent in the aqueous electrolyte solution is water.

7. The electrolyte solution according to any one of Claims 1 to 4, wherein the electrolyte solution is a non-aqueous electrolyte solution.

8. The electrolyte solution according to Claim 7, wherein organic solvents are the main solvent in the non-aqueous electrolyte solution.

9. A method for producing the electrolyte solution according to any one of Claims 1 to 8, the method comprising a step of mixing the salt of at least one selected from the group consisting of sodium, magnesium, potassium and lithium, the solvent and the chaotropic additive.

10. An electrochemical device, comprising the electrolyte solution according to any one of Claims 1 to 8.

11. A method for producing an electrochemical device, comprising using the electrolyte solution according to any one of Claims 1 to 8.

## Patentansprüche

1. Elektrolytlösung, umfassend ein Lösungsmittel, ein Salz von mindestens einer Verbindung, ausgewählt aus der Gruppe, bestehend aus Natrium, Magnesium, Kalium und Lithium, und ein chaotropes Additiv, wobei das chaotrope Additiv mindestens eines ist, ausgewählt aus der Gruppe, bestehend aus Harnstoff, Thioharnstoff, Acetamid, Trifluoracetamid, 1,1-Dimethylharnstoff, Guanidium und Guanidiumsalzen.

2. Elektrolytlösung nach Anspruch 1, wobei das Salz mindestens eines ist, ausgewählt aus der Gruppe, bestehend aus Sulfaten, Nitraten, Acetaten, Chloraten, Perchloraten, Hypochloriten, Hydroxidsalzen, Chloridsalzen, Fluoridsalzen und Imidsalzen, enthaltend mindestens eines, ausgewählt aus der Gruppe, bestehend aus Natrium, Magnesium, Kalium und Lithium.

3. Elektrolytlösung nach Anspruch 1 oder 2, wobei die Massenkonzentration des Salzes in der Elektrolytlösung 1 mol/kg oder mehr und 30 mol/kg oder weniger beträgt.

4. Elektrolytlösung nach einem der Ansprüche 1 bis 3, wobei das chaotrope Additiv Harnstoff ist.

5. Elektrolytlösung gemäß einem der Ansprüche 1 bis 4, wobei die Elektrolytlösung eine wässrige Elektrolytlösung ist.

6. Elektrolytlösung nach Anspruch 5, wobei das Hauptlösungsmittel in der wässrigen Elektrolytlösung Wasser ist.

7. Elektrolytlösung nach einem der Ansprüche 1 bis 4, wobei die Elektrolytlösung eine nichtwässrige Elektrolytlösung ist.

8. Elektrolytlösung nach Anspruch 7, wobei organische Lösungsmittel das Hauptlösungsmittel in der nichtwässrigen Elektrolytlösung sind.

9. Verfahren zur Herstellung der Elektrolytlösung nach einem der Ansprüche 1 bis 8, wobei das Verfahren einen Schritt des Mischens des Salzes von mindestens einem, ausgewählt aus der Gruppe, bestehend aus Natrium, Magnesium, Kalium und Lithium, des Lösungsmittels und des chaotropen Additivs umfasst.

10. Elektrochemische Vorrichtung, umfassend die Elektrolytlösung gemäß einem der Ansprüche 1 bis 8.

11. Verfahren zur Herstellung einer elektrochemischen Vorrichtung, umfassend die Verwendung der Elektrolytlösung nach einem der Ansprüche 1 bis 8.

## Revendications

1. Solution d'électrolyte, comprenant un solvant, un sel d'au moins un composé sélectionné parmi le groupe constitué du sodium, magnésium, potassium et lithium, et un additif chaotropique, dans laquelle l'additif chaotropique est au moins un sélectionné parmi le groupe constitué de l'urée, la thio-urée, l'acétamide, le trifluoroacétamide, la 1,1-diméthylurée, le guanidinium et des sels de guanidinium.

2. Solution d'électrolyte selon la revendication 1, dans laquelle le sel est au moins un sélectionné parmi le groupe constitué de sulfates, nitrates, acétates, chlorates, perchlorates, hypochlorites, sels d'hydroxyde, sels de chlorure, sels de fluorure et sels d'imide contenant au moins un composé sélectionné parmi le groupe constitué du sodium, magnésium, potassium et lithium.

3. Solution d'électrolyte selon la revendication 1 ou 2, dans laquelle une concentration massique en le sel dans la solution d'électrolyte est de 1 mol/kg ou plus et 30 mol/kg ou moins.

4. Solution d'électrolyte selon l'une quelconque des revendications 1 à 3, dans laquelle l'additif chaotropique est de l'urée.

5. Solution d'électrolyte selon l'une quelconque des revendications 1 à 4, dans laquelle la solution d'électrolyte est une solution d'électrolyte aqueuse.

6. Solution d'électrolyte selon la revendication 5, dans laquelle le solvant principal dans la solution d'électrolyte aqueuse est de l'eau.

7. Solution d'électrolyte selon l'une quelconque des revendications 1 à 4, dans laquelle la solution d'électrolyte est une solution d'électrolyte non aqueuse.

8. Solution d'électrolyte selon la revendication 7, dans laquelle des solvants organiques sont le solvant principal dans la solution d'électrolyte non aqueuse.

9. Procédé de production de la solution d'électrolyte selon l'une quelconque des revendications 1 à 8, le procédé comprenant une étape de mélange du sel d'au moins un composé sélectionné parmi le groupe constitué du sodium, magnésium, potassium et lithium, du solvant et de l'additif chaotropique.

10. Dispositif électrochimique, comprenant la solution d'électrolyte selon l'une quelconque des revendications 1 à 8.

11. Procédé de production d'un dispositif électrochimique, comprenant utiliser la solution d'électrolyte selon l'une quelconque des revendications 1 à 8.
